(19) Europäisches Patentamt
European Patent Office
Office européen des brevets

(11) Veröffentlichungsnummer : **0 518 887 B1**

(12) # EUROPÄISCHE PATENTSCHRIFT

(45) Veröffentlichungstag der Patentschrift :
**13.07.94 Patentblatt 94/28**

(51) Int. Cl.$^5$ : **C01B 17/94,** C01B 17/90

(21) Anmeldenummer : **91904376.0**

(22) Anmeldetag : **22.02.91**

(86) Internationale Anmeldenummer :
**PCT/EP91/00329**

(87) Internationale Veröffentlichungsnummer :
**WO 91/13828 19.09.91 Gazette 91/22**

(54) **VERFAHREN ZUR KONDITIONIERUNG VON ABFALLSCHWEFELSÄURE.**

(30) Priorität : **03.03.90 DE 4006665**

(43) Veröffentlichungstag der Anmeldung :
**23.12.92 Patentblatt 92/52**

(45) Bekanntmachung des Hinweises auf die Patenterteilung :
**13.07.94 Patentblatt 94/28**

(84) Benannte Vertragsstaaten :
**AT BE CH DE DK ES FR GB GR IT LI LU NL SE**

(56) Entgegenhaltungen :
**EP-A- 61 193**
**WO-A-89/05279**
**FR-A- 709 595**
**US-A- 2 198 686**

(73) Patentinhaber : **HOECHST AKTIENGESELLSCHAFT**
**D-65926 Frankfurt (DE)**

(72) Erfinder : **VON PLESSEN, Helmold**
**Kugelherrnstrasse 16**
**D-6240 Königstein (DE)**
Erfinder : **FRITSCHE-LANG, Wolfram**
**Wenastrasse 19**
**D-6140 Bensheim (DE)**
Erfinder : **LORKE, Horst**
**Wachenheimer Strasse 14**
**D-6237 Liederbach (DE)**

**EP 0 518 887 B1**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft ein Verfahren zur Konditionierung von Abfallschwefelsäure, die zur Ausscheidung von Teeren oder Harzen neigt, mit Hilfe von Emulgatoren.

Bei vielen chemischen Prozessen entsteht eine mit Wasser, organischen oder anorganischen Stoffen, wie Nitroverbindungen, Sulfonsäuren, Mineralsalzen, Salpetersäure oder Chlorwasserstoff beladene Schwefelsäure als Abfallprodukt. Der Gehalt solcher Abfallschwefelsäure schwankt in weiten Grenzen. Sie kann beispielsweise als Dünnsäure mit 5 bis 60 Gew.-% oder als Abfallsäure mit 60 bis 80 Gew.-% $H_2SO_4$ anfallen. Für die Konzentrierung solcher verunreinigter Abfallschwefelsäure durch Abdampfen des Wasseranteils sind mehrere Verfahren bekannt. Die Methode, nach welcher eingedampft wird, richtet sich in der Regel nach dem Gehalt der Abfallschwefelsäure.
Beispielsweise läßt sich Abfallsäure mit 60 bis 80 Gew.-% $H_2SO_4$ nach dem Pauling-Verfahren zu einer 95 bis 96 gew.-%igen $H_2SO_4$ konzentrieren. Stärker verdünnte Schwefelsäure kann im Umlaufverdampfer eingedampft werden (Winnacker-Küchler, Chemische Technologie, Band 2 (1982), S. 61 bis 71). Mit organischen Stoffen belastete Abfallsäure läßt sich auch durch thermische Spaltung aufarbeiten, wofür jedoch sehr viel Energie aufgewendet werden muß (loc. cit. Seite 23 bis 25).

Abfallschwefelsäure muß in der Regel vor bzw. bei ihrer Aufarbeitung transportiert oder gelagert werden. Dies ist erheblich erschwert oder gar unmöglich, wenn sich aus der Abfallschwefelsäure eine feste oder hochviskose Phase abscheidet. So können durch ausgeschiedene Harze oder Teere Rohrleitungen verschlossen oder Behälter so weitgehend ausgefüllt werden, daß sie in ihrer Funktion stark behindert sind. Auch andere Teile der Einrichtungen zur Wiederaufbereitung, wie Wärmeaustauscher, können durch Niederschläge, insbesondere durch Harz- oder Teerausscheidungen, die die Abfallschwefelsäure mit sich führt, in ihrer Funktion beeinträchtigt werden.

Solche störenden Ausscheidungen können prinzipiell durch Filtration abgetrennt werden, doch gerade Harze oder Teere führen leicht zur Verstopfung der Filterapparate (DE- A- 24 50 255). Auch beobachtet man häufig nach einer Filtration eine erneute Fällung.

Besonders bei der Nitrierung reaktiver Aromaten, wie Naphthalin oder Acenaphthen, werden neben den gewünschten Nitroverbindungen häufig auch wechselnde Mengen an Harzen gebildet (Houben-Weyl, Methoden der organ. Chemie, 4. Auflage, Band 10/1 (1971), S. 492, 496). Die Abfallschwefelsäure, die dabei erhalten wird, neigt dazu, sogenannte Nitrierharze abzusondern, wodurch die Wiederaufarbeitung stark erschwert wird. Innerhalb oftmals nur weniger Stunden scheidet sich aus der Abfallschwefelsäure so viel Harz aus, daß die Rohrleitungen und Behälter verkleben. Nitrierprozesse, wie sie beispielsweise in Houben-Weyl, Methoden der organ. Chemie, 4. Auflage, Band 10/1 (1971), S. 663 aufgeführt sind, ergeben ebenfalls solche problematischen Abfallschwefelsäuren.

Auch bei Nitrierungen in hochkonzentrierter Salpetersäure können diese sogenannten Nitrierharze als unerwünschte Nebenprodukte auftreten (DE-A- 23 38 479) und zu Ablagerungen führen.

Die Ablagerungen in den Rohrleitungen, Behältern oder Apparaten lassen sich zwar in der Regel durch eine Wäsche mit einem Lösemittel entfernen, doch stellt dies einen zusätzlichen Verfahrensschritt dar. Die dabei anfallenden verunreinigten Lösemittel müssen noch dazu ebenfalls wieder aufgearbeitet werden.

Es ist bekannt, Abfallschwefelsäure durch Behandeln mit Aktivkohle zu konditionieren, d.h. für Lagerung, Transport und Wiederaufarbeitung stabil zu machen. Nachteilig an diesem Verfahren sind die hohen Kosten für die Beschaffung der frischen Aktivkohle und für die Entsorgung der gebrauchten. So behandelte Abfallschwefelsäure sondert zudem häufig schon nach kurzer Zeit erneut Verunreinigungen ab.

Daneben sind mehrere Verfahren zur Beseitigung der Verunreinigungen aus den genannten Abfallschwefelsäuren durch Behandeln mit Oxidationsmitteln beschrieben (DE-A- 24 04 613, DE-A- 24 50 255). Diese sind jedoch nur mit einem erheblichen Aufwand an Apparaten und Chemikalien realisierbar. Zudem können Probleme auftreten in allen für den Säuretransport oder die Lagerung notwendigen Rohrleitungen oder Behältern, die die Abfallschwefelsäure durchlaufen muß, bevor sie den Oxidationsreaktor erreicht.

Es bestand daher die Aufgabe, Verfahren zu entwickeln, die es ermöglichen, auch solche Abfallschwefelsäuren, die zur Ausscheidung von Teeren oder Harzen neigen, problemlos zu lagern, zu transportieren und wieder aufzuarbeiten.

Es wurde nunmehr gefunden, daß durch Zugabe von Emulgatoren zu der Abfallschwefelsäure das Problem gelöst wird.

Gegenstand der vorliegenden Erfindung ist demgemäß ein Verfahren zur Konditionierung von Abfallschwefelsäure, die zur Absonderung von Teeren oder Harzen neigt, das dadurch gekennzeichnet ist, daß der Abfallschwefelsäure Emulgatoren zugesetzt werden. Als Emulgatoren werden Polyether, insbesondere Polyglykolether, vorzugsweise mit einem langkettigen Rest eingesetzt.

Besonders geeignet für das erfindungsgemäße Verfahren sind an organische Reste gebundene Polyglykolether, vorzugsweise solche der allgemeinen Formel $R^1O-(CHRCH_2O)_nH$ (I), in der bedeuten:

R = H und/oder niederes Alkyl, insbesondere Methyl,

$R^1$ = Kohlenwasserstoffrest mit 8 bis 26 C-Atomen, vorzugsweise Alkyl oder Alkenyl mit einer mittleren Kettenlänge von 8 bis 22, insbesondere von 12 bis 14 oder von 16 bis 18 Kohlenstoffatomen, wie Oleyl, wobei der letztere Bereich besonders bevorzugt ist; weiterhin vorzugsweise ($C_6$-$C_{20}$)Alkylphenyl, wie Nonylphenyl, oder Di- oder Trialkylphenyl, wobei die Kettenlänge der Alkylgruppen insgesamt 6 bis 20 Kohlenstoffatome beträgt, insbesondere Di- oder Tributylphenyl, und

n = eine ganze Zahl von 2 bis 50, bevorzugt von 5 bis 20, besonders bevorzugt 5 bis 10.

In gleicher Weise bevorzugt sind Verbindungen der allgemeinen Formel

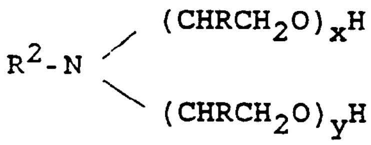

(II)

worin R die oben genannte Bedeutung hat, $R^2$ ein Kohlenwasserstoffrest mit 8 bis 26 C-Atomen, vorzugsweise Alkyl oder Alkenyl mit einer mittleren Kettenlänge von 8 bis 22, vorzugsweise 12 bis 14 oder 16 bis 18, Kohlenstoffatomen bedeutet, wobei der letztere Bereich besonders bevorzugt ist, und die Summe aus x und y 4 bis 50, bevorzugt 5 bis 40 und besonders bevorzugt 5 bis 25, ist.

Auch Gemische von Emulgatoren, insbesondere solchen der vorgenannten Konstitutionen, sind geeignet.

Für das erfindungsgemäße Verfahren werden die Emulgatoren, vorzugsweise Polyglykolether als solche oder gelöst in Wasser, in einem anorganischen oder organischen Lösemittel, wie Nitrobenzol, oder in einer Mineralsäure, wie Schwefelsäure, der Abfallschwefelsäure zugesetzt. Die Zugabe kann in Behältern erfolgen, die mit Rührern versehen sind, oder in anderen Mischvorrichtungen. Der Mischprozeß erfolgt vorzugsweise bei Temperaturen von 0 bis 30°C. Das erfindungsgemäße Verfahren ist prinzipiell für Abfallschwefelsäuren von beliebigem $H_2SO_4$-Gehalt geeignet. Die erforderliche Menge an Emulgator richtet sich nach dem Grad der Belastung der Abfallschwefelsäure, sowie nach der Standzeit, die für die jeweilige Abfallschwefelsäure bei Transport oder Lagerung erreicht werden soll. Diese beträgt im allgemeinen 1 bis 8 Tage. Je länger die Standzeiten und je höher die Umgebungstemperaturen bei Transport oder Lagerung sind, desto größer muß in der Regel die Menge an zugesetztem Emulgator sein. Im allgemeinen beträgt diese Menge etwa 0,01 bis etwa 3 Gew.-%, vorzugsweise etwa 0,05 bis etwa 2 Gew.-%, besonders bevorzugt etwa 0,1 bis etwa 1 Gew.-%, bezogen auf das Gewicht der eingesetzten Abfallschwefelsäure.

Der Emulgator kann in manchen Fällen ein Schäumen der Abfallschwefelsäure bei der weiteren Verarbeitung, z.B. bei der Eindampfung, bewirken. Dieses Schäumen kann gemäß den DE-A- 26 56 236 oder DE-A-26 53 088 durch Zugabe von geeigneten Sulfonsäuren oder Nitroverbindungen verhindert werden. Auch mit Hilfe von Alkylsulfonamiden kann der Schaum beseitigt werden.

## Beispiele 1-14

Die Lagerstabilität von 35 Gew.-%iger Abfallschwefelsäure aus der Herstellung von Nitrotoluidin (in der folgenden Tabelle als Schwefelsäure vom Typ 1 bezeichnet) bei verschiedenen Temperaturen in Gegenwart eines Emulgators ist in den Beispielen 5 und 6 dargestellt.

Daneben wurde die Haltbarkeit von Säuregemischen aus der genannten Schwefelsäure vom Typ 1 mit einer unbelasteten reinen 65 Gew.-%igen Schwefelsäure (Typ 2) oder mit einer 60 Gew.-%igen Abfallschwefelsäure aus der Herstellung von Alkansulfonat (Typ 3) bei Raumtemperatur (22°C) in Gegenwart eines Emulgators untersucht. (Beispiele 7 bis 9, 11, 12 und 14). Als Emulgatoren wurden verwendet: Oleyl-aminoxethylat, x + y = 5 (Emulgator Typ A), Oleyl-aminoxethylat, x + y = 15 (Typ B) und Oleyl-oxethylat, n = 8 (Typ C) sowie Nonylphenyl-polyglykolether, n = 10 (Typ D).

Die Vergleichsbeispiele 1 bis 4, 10 und 13 zeigen die Beschaffenheit der Abfallschwefelsäure vom Typ 1 sowie die von Gemischen dieser Säure mit Schwefelsäure vom Typ 2 oder 3 in Abwesenheit eines Emulgators nach Ablauf verschiedener Standzeiten. Im Vergleichsbeispiel 13 wurde die Schwefelsäure vom Typ 1 mit Aktivkohle vorbehandelt.

| Beispiel | Schwefelsäure | | Emulgator | | Temp. | Zustand der Proben nach Standzeit | | | | |
|---|---|---|---|---|---|---|---|---|---|---|
| | Typ | Mischungsverhältnis (vol./vol.) | Typ | Menge [g] pro 100 g Säuregemisch | °C | 1 Tag | 3 Tage | 6-7 Tage | 9-10 Tage | 15-16 Tage |
| 1 * | 1 | | | | 0 | d, f | d, f | e, f | e, f | e, f |
| 2 * | 1 | | | | 22 | e, f | e, f | e, f | e, f | e, f |
| 3 * | 1:2 | 1:1 | | | 0 | a | a | a | a | a |
| 4 * | 1:2 | 1:1 | | | 22 | a | b | d | e, f | e, f |
| 5 | 1 | | A | 0,8 | 0 | b | b | c | c, f | c, f |
| 6 | 1 | | A | 1,6 | 22 | a | b | b | b | b |
| 7 | 1:2 | 1:1 | B | 0,18 | 22 | a | a | | d | d |
| 8 | 1:2 | 1:1 | B | 0,35 | 22 | a | a | | a | c |
| 9 | 1:2 | 1:1 | C | 0,35 | 22 | a | a | | d | d |
| 10 * | 1:3 | 1:1 | | | 22 | b | d | e, f | e, f | e, f |
| 11 | 1:3 | 1:1 | B | 0,18 | 22 | c | | c | 12 Tage: d | d, f |
| 12 | 1:3 | 1:1 | B | 0,36 | 22 | b | | b | 12 Tage: c | d |
| 13 * | 1 | | Aktivkohle | 1,1 | 0 | b | e | e | e, f | e, f |
| 14 | 1:2 | 1:1 | D | 0,35 | 22 | a | a | | | a |

a klar
b Spur trübe
c deutlich trübe
d trübe
e stark trübe
f Abscheidungen

* Vergleichsbeispiel

**Beispiel 15**

1 l einer 37,6 Gew.-%igen Abfallschwefelsäure aus der Herstellung von Nitrotoluidin wurde mit 1 l einer 65 Gew.-%igen Schwefelsäure vermischt. Nach Hinzufügen von 5 g (0,18 Gew.-%) Oleyl-aminoxethylat (x + y = 15) wurde die Mischung 2 Tage lang bei 22°C stehengelassen. Anschließend wurden 250 ml dieses Säuregemisches (C: 0,8 %; N: 0,3 %) in eine Destillationsapparatur gefüllt und unter Rühren zum Sieden erhitzt. Während der folgenden 3,5 h dauernden Destillation wurden 1,5 l des Säuregemisches kontinuierlich in die Destillationsapparatur eingespeist. Nach Ablauf dieser Zeit hatten sich 635 g eines wäßrigen Destillats (C: 1,3 %; N: 0,03 %), das noch 2,2 Gew.-% an $H_2SO_4$ enthielt, angesammelt. Lediglich während der ersten 25 min. des Destillationsprozesses, in denen insgesamt 130 ml Säuregemisch eingespeist wurden, mußten zur Schaumbeseitigung 15,8 g Entschäumer Bayer 7800 neu® in Form einer 33 gew.-%igen wäßrigen Emulsion zugegeben werden.

Nach Abschluß der Destillation waren im Sumpf 1874 g einer 68,3 gew.-%igen schwarzbraun gefärbten und schwach trüben Schwefelsäure (C: 0,7 %; N: 0,11 %; gleiche Werte nach Filtration) zurückgeblieben. Diese so erhaltene aufkonzentrierte Säure erwies sich als lagerstabil. Weder an den Wandungen der Destillationsapparatur noch an denen des Lagerbehälters traten festhaftende Abscheidungen auf.

## Patentansprüche

1. Verfahren zur Konditionierung von Abfallschwefelsäure, die zur Absonderung von Teeren oder Harzen neigt, dadurch gekennzeichnet, daß der Abfallschwefelsäure Polyether als Emulgatoren zugesetzt werden.

2. Verfahren nach Anspruch 1, dadurch gekennzeichnet, daß Abfallschwefelsäure aus Nitrierungsprozessen, vorzugsweise aus der Nitrierung von Aromaten, konditioniert wird.

3. Verfahren nach Anspruch 1 oder 2, dadurch gekennzeichnet, daß als Emulgatoren Polyglykolether eingesetzt werden.

4. Verfahren gemäß einem oder mehreren der Ansprüche 1 bis 3, dadurch gekennzeichnet, daß als Emulgatoren Verbindungen der allgemeinen Formel $R^1O-(CHRCH_2O)_nH$ (I) verwendet werden, worin R H und-/oder niederes Alkyl, insbesondere Methyl ist und $R^1$ Alkyl oder Alkenyl mit einer mittleren Kettenlänge von 8 bis 22, vorzugsweise 12 bis 14 oder 16 bis 18 Kohlenstoffatomen, Alkylphenyl, wobei die Alkylgruppe eine Kettenlänge von 6 bis 20 Kohlenstoffatomen hat, oder Di- oder Trialkylphenyl, wobei die Kettenlänge der Alkylgruppen insgesamt 6 bis 20 Kohlenstoffatome beträgt, ist und n eine ganze Zahl von 2 bis 50, vorzugsweise von 5 bis 20 darstellt.

5. Verfahren gemäß einem oder mehreren der Ansprüche 1 bis 3, dadurch gekennzeichnet, daß als Emulgatoren Verbindungen der allgemeinen Formel

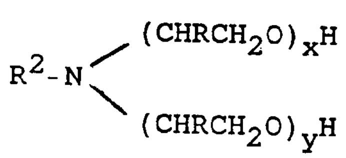

(II)

eingesetzt werden, worin R H und/oder niederes Alkyl, insbesondere Methyl, ist, $R^2$ Alkyl oder Alkenyl mit einer mittleren Kettenlänge von 8 bis 22, vorzugsweise 12 bis 14 oder 16 bis 18 Kohlenstoffatomen ist und die Summe aus x und y 4 bis 50, vorzugsweise 5 bis 40 beträgt.

6. Verfahren gemäß einem oder mehreren der Ansprüche 1 bis 5, dadurch gekennzeichnet, daß die Menge an Emulgator 0,01 bis 3 Gew.-%, vorzugsweise 0,05 bis 2 Gew.-%, bezogen auf das Gewicht der Abfallschwefelsäure, beträgt.

## Claims

1. A process for conditioning waste sulfuric acid which is prone to precipitation of tars or resins, which comprises adding a polyether as emulsifier to the waste sulfuric acid.

2. The process as claimed in claim 1, wherein waste sulfuric acid from nitration processes, preferably from the nitration of aromatics, is conditioned.

3. The process as claimed in claim 1 or 2, wherein a polyglycol ether is used as the emulsifier.

4. The process as claimed in one or more of claims 1 to 3, wherein the emulsifier used is a compound of the formula $R^1O-(CHRCH_2O)_nH$ (I), in which R is H and/or lower alkyl, especially methyl, and $R^1$ is alkyl or alkenyl having an average chain length of 8 to 22, preferably 12 to 14 or 16 to 18, carbon atoms, alkylphenyl with the alkyl group having a chain length of 6 to 20 carbon atoms, or di- or trialkylphenyl with the alkyl groups having a chain length of 6 to 20 carbon atoms in total, and n is an integer from 2 to 50, preferably from 5 to 20.

5. The process as claimed in one or more of claims 1 to 3, wherein the emulsifier used is a compound of the formula

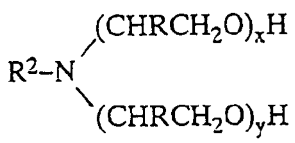

(II)

in which R is H and/or lower alkyl, especially methyl, $R^2$ is alkyl or alkenyl having an average chain length of 8 to 22, preferably 12 to 14 or 16 to 18, carbon atoms, and the total of x and y is 4 to 50, preferably 5 to 40.

6. The process as claimed in one or more of claims 1 to 5, wherein the quantity of emulsifier is 0.01 to 3 % by weight, preferably 0.05 to 2 % by weight, relative to the weight of the waste sulfuric acid.

## Revendications

1. Procédé de conditionnement d'acide sulfurique résiduaire ayant tendance à précipiter des goudrons ou des résines, caractérisé en ce que l'on ajoute à l'acide sulfurique résiduaire des polyéthers comme émulsionnants.

2. Procédé selon la revendication 1, caractérisé en ce que l'on conditionne de l'acide sulfurique résiduaire issu de procédés de nitration, de préférence de nitration de produits aromatiques.

3. Procédé selon la revendication 1 ou 2, caractérisé en ce que l'on utilise des éthers de polyglycol comme émulsionnants.

4. Procédé selon l'une ou plusieurs des revendications 1 à 3, caractérisé en ce que l'on utilise comme émulsionnants des composés de formule générale $R^1O-(CHRCH_2O)_nH$ (I), dans laquelle R représente H et/ou un alkyle inférieur, en particulier un méthyle, $R^1$ représente un reste alkyle ou alcényle ayant une longueur de chaîne moyenne de 8 à 22, de préférence de 12 à 14 ou de 16 à 18 atomes de carbone, un reste alkylphényle dans lequel le groupe alkyle a une longueur de chaîne de 6 à 20 atomes de carbone, ou di- ou trialkylphényle, dans lequel la longueur des chaînes des groupes alkyle représente au total 6 à 20 atomes de carbone, et n est un nombre entier de 2 à 50, de préférence de 5 à 20.

5. Procédé selon l'une quelconque des revendications 1 à 3, caractérisé en ce que l'on utilise comme émulsionnants des composés de formule générale

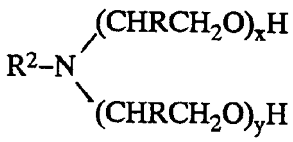

(II)

dans laquelle R représente H et/ou un alkyle inférieur, en particulier un méthyle, $R^2$ représente un reste alkyle ou alcényle ayant une longueur de chaîne moyenne de 8 à 22, de préférence de 12 à 14 ou de 16 à 18 atomes de carbone, et la somme de x et y est comprise entre 4 et 50, de préférence entre 5 et 40.

6. Procédé selon l'une ou plusieurs des revendications 1 à 5, caractérisé en ce que la quantité d'émulsionnant est de 0,01 à 3 % en masse, de préférence de 0,05 à 2 % en masse, par rapport à la masse de l'acide sulfurique résiduaire.